# DEMANDE DE BREVET EUROPEEN

(11) **EP 0 841 267 A1**
(43) Date de publication de la demande: **13.05.1998**
(21) Numéro de dépôt: 97402603.1
(22) Date de dépôt: 31.10.1997
(51) Int. Cl.: B65G 15/10, B65G 47/82, B07C 5/36

(54) **Dispositif de manutention de produits**

(30) Priorité: 08.11.1996 FR 9613681
(71) Demandeur: XEDA INTERNATIONAL, 13670 Saint-Andiol (FR)
(72) Inventeur: Sardo, Alberto, 13160 - Chateaurenard (FR)
(74) Mandataire: Blot, Philippe Robert Emile

(57) **Abrégé**

L'invention concerne un dispositif de manutention de produits (P) tels que des fruits, comportant d'une part un convoyeur (10) à deux brins (12A, 12B) circulant sensiblement parallèlement l'un à l'autre et sur lequel reposent les produits (P) et d'autre part des moyens (22) d'éjection des produits (P) disposés le long du convoyeur (10) sur un tronçon (18) d'éjection des produits (P). Les moyens (22) d'éjection sont adaptés pour éjecter latéralement les produits (P) du convoyeur (10) par basculement au-delà d'un des brins (12A) du convoyeur. Sur ledit tronçon (18) d'éjection des produits (P), les deux brins (12A, 12B) du convoyeur (10) sont disposés à des niveaux différents par rapport à l'horizontale.

## Description

La présente invention concerne un dispositif de manutention de produits, tels que des fruits, du type comportant d'une part un convoyeur à deux brins circulant sensiblement parallèlement l'un à l'autre et sur lequel reposent les produits et d'autre part des moyens d'éjection des produits disposés le long du convoyeur sur un tronçon d'éjection des produits, lesquels moyens sont adaptés pour éjecter latéralement les produits du convoyeur par basculement au-delà d'un des brins du convoyeur.

Ce dispositif est destiné notamment au transfert de produits d'un convoyeur vers un autre convoyeur.

Un tel dispositif de manutention de produits est décrit en regard de la figure 5 de la demande de brevet FR-A-2.612.090 au nom de la Demanderesse.

Le dispositif décrit dans ce document comporte deux brins s'étendant parallèlement l'un à l'autre dans un même plan horizontal. Les moyens d'éjection comportent une fourche disposée transversalement au convoyeur et mobile en rotation entre une position escamotée au-dessous du convoyeur et une position d'éjection des fruits dans laquelle l'un des bras de la fourche s'étend entre les deux brins du convoyeur et l'autre bras s'étend à l'extérieur du convoyeur.

Un tel dispositif présente des inconvénients. En effet, les moyens d'éjection du fruit doivent être capables de vaincre le poids du fruit reposant à plat sur les deux brins parallèles. En particulier, le fruit étant de forme sensiblement sphérique, les moyens d'éjection doivent dégager celui-ci suffisamment des brins du convoyeur afin de permettre son basculement latéral.

Aussi, la force appliquée par la fourche sur le fruit en vue de son éjection doit être d'une grande intensité.

Dans ces conditions, les produits peuvent être endommagés par l'action de la fourche d'éjection sur le fruit. Ce risque est d'autant plus important que la fourche agit pendant le mouvement continu du convoyeur.

L'invention a pour but de proposer un dispositif de manutention de produits, notamment de fruits, qui réduise les dommages causés aux produits lors de leur éjection.

A cet effet, l'invention a pour objet un dispositif de manutention du type précité, caractérisé en ce que, sur ledit tronçon d'éjection des produits, les deux brins du convoyeur sont disposés à des niveaux différents par rapport à l'horizontale.

La différence de niveaux entre les deux brins du convoyeur permet de réduire la force d'éjection à appliquer au produit en vue de son basculement, le brin du convoyeur devant être franchi se trouvant à un niveau inférieur à celui rencontré dans les dispositifs connus.

Suivant des modes particuliers de réalisation, le dispositif de manutention selon l'invention peut comporter une ou plusieurs des caractéristiques suivantes :
- le brin le plus bas est prévu du côté de l'éjection latérale des produits ;
- la hauteur de la différence de niveaux entre les deux brins est comprise entre sensiblement 0,1 et 1 fois la distance séparant les deux brins parallèles mesurée horizontalement ;
- la hauteur de la différence de niveaux entre les deux brins est comprise entre sensiblement 0,1 et 0,5 fois la distance séparant les deux brins parallèles mesurée horizontalement ;
- les moyens d'éjection comportent un organe d'actionnement sollicitant le produit suivant une direction s'étendant dans un plan sensiblement perpendiculaire au plan défini par les deux brins parallèles dans le tronçon d'éjection ;
- la sollicitation des produits s'effectue entre les deux brins du convoyeur et la direction de sollicitation des produits définit avec l'horizontale un angle compris entre sensiblement 40° et 80°, notamment sensiblement égal à 60° ;
- la sollicitation des produits s'effectue à l'extérieur de l'intervalle délimité par les deux brins du convoyeur, et la direction de sollicitation des produits définit avec l'horizontale un angle compris entre sensiblement 10° et 50°, notamment sensiblement égal à 25° ;
- ledit organe d'actionnement du fruit comporte une buse de projection d'un fluide sous pression sur le produit suivant la direction de sollicitation ;
- ledit fluide est de l'air ;
- l'organe d'actionnement comporte un vérin ; et
- l'organe d'actionnement est un électro-aimant.

L'invention sera mieux comprise à la lecture de la description qui va suivre, donnée uniquement à titre d'exemple et faite en se référant aux dessins sur lesquels :
- La figure 1 est une vue partielle en perspective d'un dispositif de manutention selon l'invention ; et
- Les figures 2 à 7 sont des vues en coupe transversale du dispositif de manutention selon trois modes de réalisation différents de l'invention.

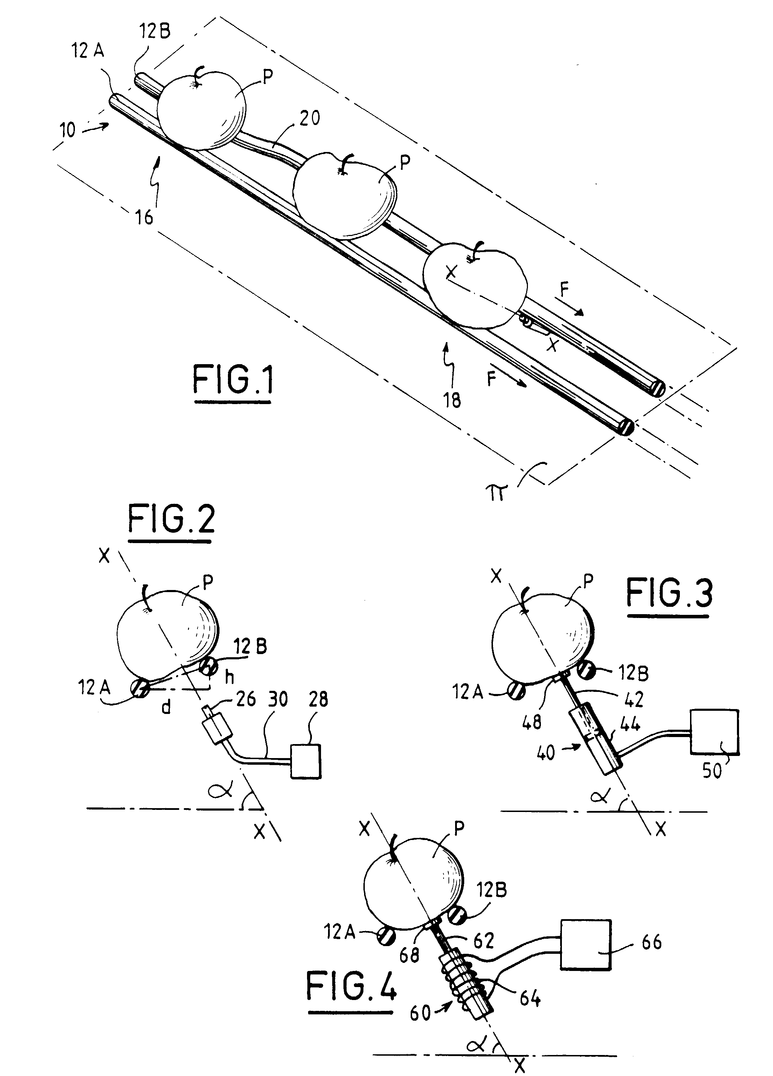

Le dispositif de manutention représenté sur la figure 1 comporte un convoyeur 10 comportant deux brins souples 12A, 12B s'étendant sensiblement parallèlement. Chaque brin est refermé sur lui-même pour former une boucle guidée à ses deux extrémités par deux roues de retournement (non représentées) dont l'une est motorisée. Ainsi, les deux brins 12A, 12B se déplacent sensiblement parallèlement l'un à l'autre à la même vitesse suivant le sens des flèches F (figure 1).

Les deux brins 12A, 12B comportent à intervalles réguliers des organes faisant saillie vers l'extérieur et sur lesquels reposent des produits P. Ces organes assurent la retenue longitudinale de produits P sur le convoyeur. Pour des raisons de clarté, ces organes n'ont pas été représentés. Ceux-ci pouvant être de toute nature, ils ne seront pas décrits en détail ici.

Dans la partie courante du convoyeur, désignée par la référence générale 14, les deux brins 12A, 12B s'étendent parallèlement l'un à l'autre dans un plan horizontal figuré sur la figure 1 et désigné par la référence π.

Le convoyeur comporte un tronçon d'éjection des produits, désigné par la référence générale 18. Dans ce tronçon d'éjection, les deux brins du convoyeur sont disposés à des niveaux différents par rapport au plan horizontal π. En particulier, le brin 12B est disposé à un niveau supérieur à celui du brin 12A. Les deux brins 12A et 12B sont néanmoins parallèles sur le tronçon d'éjection 18.

La partie courante du brin 12B est reliée à la partie du brin 12B du tronçon d'éjection par une rampe 20 dans laquelle le niveau du brin 12B s'élève progressivement. Le brin 12B est guidé de part et d'autre de la rampe par des roues non représentées.

Par ailleurs, le dispositif de manutention comporte des moyens d'éjection portant la référence générale 22 disposés généralement au-dessous du convoyeur. Ces moyens d'éjection, dont trois modes de réalisation différents sont représentés sur les figures 2 à 4, sont adaptés pour solliciter le produit P entre les deux brins 12A, 12B et pousser celui-ci généralement vers le haut de sorte qu'il bascule latéralement au-delà du brin 12A du convoyeur. En vue du basculement, le brin 12A le plus bas est prévu du côté de l'éjection latérale des produits.

Selon l'invention, et comme représenté sur la figure 2, la hauteur h de la différence de niveau entre les brins 12A et 12B, est comprise entre sensiblement 0,1 et 1 fois la distance d mesurée suivant l'horizontale et séparant les deux brins. Avantageusement, le rapport h/d est compris entre 0,1 et 0,5, en particulier entre 0,2 et 0,3 et est de préférence sensiblement égal à 0,25.

En particulier, dans le cas où les produits P sont des fruits tels que des pommes ayant un diamètre compris entre 7 cm et 9 cm, la distance d est sensiblement égale à 6 cm et la hauteur h est sensiblement égale à 1,5 cm.

Pour chacun des modes de réalisation représentés aux figures 2 à 4, les moyens d'éjection comportent un organe d'actionnement sollicitant le produit suivant une direction notée X-X sur les figures s'étendant dans un plan perpendiculaire au plan défini par les deux brins 12A, 12B dans le tronçon d'éjection 18.

La direction X-X de sollicitation du produit définit avec l'horizontale un angle a compris entre 40° et 80°, avantageusement entre 30° et 70° et de préférence sensiblement égal à 60°.

Dans le mode de réalisation représenté sur la figure 2, l'organe d'actionnement comporte une buse 26 d'éjection d'un fluide sous pression suivant la direction X-X de sollicitation du produit. La buse 16 est fixe par rapport au convoyeur 10. Le fluide sous pression est par exemple de l'air envoyé sous pression depuis un compresseur 28 via une conduite 30.

Dans la variante de réalisation représentée sur la figure 3, l'organe d'actionnement comporte un vérin 40 dont la tige 42 est déplaçable suivant la direction X-X. Le corps du vérin 44 est fixe par rapport au plan π défini par les brins 12A, 12B sur le tronçon d'éjection. L'extrémité libre de la tige 42 est munie d'un patin amortisseur 48, en caoutchouc par exemple, destiné à entrer en contact avec le produit P.

Le vérin 40 est un vérin pneumatique ou hydraulique et est relié à une source appropriée de fluide d'actionnement sous pression désignée par la référence 50.

Dans le mode de réalisation représenté sur la figure 4, le vérin de la figure 3 est remplacé par un électro-aimant 60 dont la tige 62 s'étend suivant la direction X-X. La bobine 64 de l'électro-aimant est reliée à une source de différence de potentiel appropriée 66. Comme précédemment, l'extrémité libre de la tige 62 est munie d'un patin amortisseur 68.

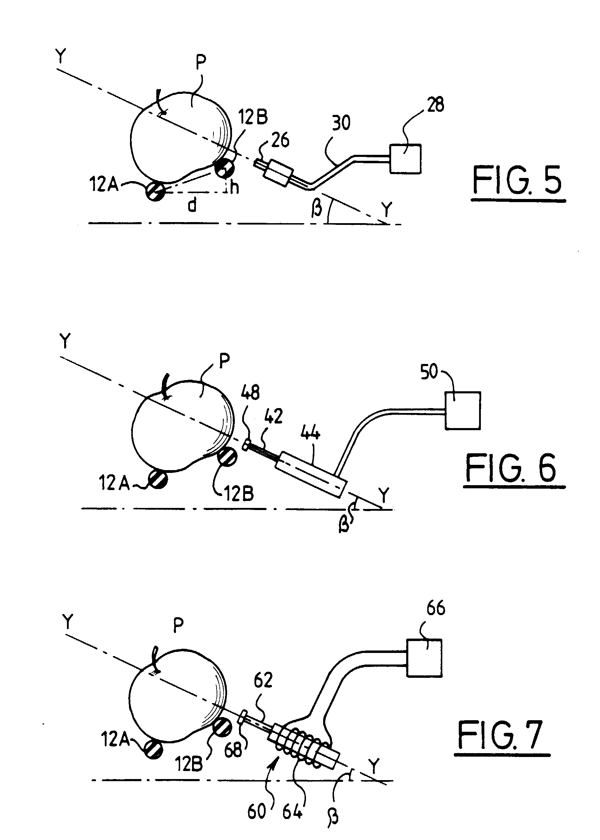

Sur les figures 5 à 7 sont représentées des variantes de réalisation des agencements représentés sur les figures 2 à 4.

Dans ces variantes, les moyens de sollicitation des figures 5 à 7 sont analogues respectivement à ceux des figures 2 à 4. Toutefois, la sollicitation des produits n'est plus effectuée entre les deux brins 12A, 12B mais à l'extérieur de l'intervalle délimité par les deux brins.

En particulier, l'axe de sollicitation s'étend au-dessus du brin 12B disposé le plus haut.

Comme représenté sur ces figures, la direction de sollicitation, notée Y-Y, définit avantageusement avec l'horizontale un angle β sensiblement égal à 25°. Dans la pratique, l'angle β est compris entre sensiblement 10° et sensiblement 50°.

On comprend que, avec un dispositif selon l'invention, les produits nécessitent pour leur éjection latérale une force de sollicitation réduite, ceux-ci étant déjà légèrement en porte-à-faux du fait du décalage en hauteur des deux brins du convoyeur.

En outre, dans un dispositif tel que décrit dans la demande FR-A-2.612.030, il est difficile de garantir que le fruit soit toujours éjecté du même côté. En effet, le fruit est sollicité essentiellement par le bras de la fourche s'étendant entre les deux brins du convoyeur. Le bras extérieur au convoyeur prévu pour diriger le fruit vers le côté d'éjection n'est actif que dans la mesure où le produit présente un diamètre suffisant pour entrer en contact avec celui-ci. Dans ces conditions, les fruits de petit diamètre risquent d'être éjectés de manière aléatoire d'un côté ou de l'autre du convoyeur.

Dans le dispositif décrit ici, le produit est incité de lui-même à basculer au-delà du brin 12A disposé le plus bas, celui-ci étant disposé du côté d'éjection. Aussi, un tel agencement garantit que tous les produits basculent du même côté du convoyeur.

Dans le mode de réalisation de la figure 2, l'absence de contact mécanique entre les moyens d'éjection et le produit évite tout risque de détérioration de celui-ci.

Dans les exemples décrits ici, le brin 12B du convoyeur s'élève en amont du tronçon d'éjection 18 suivant la rampe 20.

Dans une variante de réalisation non représentée, le brin 12B circule à une hauteur constante entre les deux roues d'extrémité et le brin 12A est dévié vers le bas suivant une rampe en amont du tronçon d'éjection.

Ainsi, comme dans le mode de réalisation décrit ici, le brin 12A est à un niveau inférieur à celui du brin 12B sur le tronçon d'éjection procurant ainsi les avantages exposés ci-dessus.

## Revendications

1. Dispositif de manutention de produits (P) tels que des fruits, du type comportant d'une part un convoyeur (10) à deux brins (12A, 12B) circulant sensiblement parallèlement l'un à l'autre et sur lequel reposent les produits (P) et d'autre part des moyens (22) d'éjection des produits (P) disposés le long du convoyeur (10) sur un tronçon (18) d'éjection des produits (P), lesquels moyens (22) sont adaptés pour éjecter latéralement les produits (P) du convoyeur (10) par basculement au-delà d'un des brins (12A) du convoyeur, caractérisé en ce que, sur ledit tronçon (18) d'éjection des produits (P), les deux brins (12A, 12B) du convoyeur (10) sont disposés à des niveaux différents par rapport à l'horizontale.

2. Dispositif selon la revendication 1, caractérisé en ce que le brin (12A) le plus bas est prévu du côté de l'éjection latérale des produits.

3. Dispositif selon la revendication 1 ou 2, caractérisé en ce que la hauteur (h) de la différence de niveaux entre les deux brins (12A, 12B) est comprise entre sensiblement 0,1 et 1 fois la distance (d) séparant les deux brins parallèles (12A, 12B) mesurée horizontalement.

4. Dispositif selon la revendication 3, caractérisé en ce que la hauteur (h) de la différence de niveaux entre les deux brins (12A, 12B) est comprise entre sensiblement 0,1 et 0,5 fois la distance (d) séparant les deux brins parallèles (12A, 12B) mesurée horizontalement.

5. Dispositif selon l'une quelconque des revendications précédentes, caractérisé en ce que les moyens d'éjection comportent un organe d'actionnement (26, 40, 50) sollicitant le produit (P) suivant une direction (X-X) s'étendant dans un plan sensiblement perpendiculaire au plan défini par les deux brins parallèles (12A, 12B) dans le tronçon d'éjection (18).

6. Dispositif selon la revendication 5, caractérisé en ce que la sollicitation des produits s'effectue entre les deux brins (12A, 12B) du convoyeur et en ce que la direction (X-X) de sollicitation des produits définit avec l'horizontale un angle (a) compris entre sensiblement 40° et 80°, notamment sensiblement égal à 60°.

7. Dispositif selon la revendication 5, caractérisé en ce que la sollicitation des produits s'effectue à l'extérieur de l'intervalle délimité par les deux brins (12A, 12B) du convoyeur, et en ce que la direction (Y-Y) de sollicitation des produits définit avec l'horizontale un angle (β) compris entre sensiblement 10° et 50°, notamment sensiblement égal à 25°.

8. Dispositif selon l'une quelconque des revendications 5 à 7, caractérisé en ce que ledit organe d'actionnement du fruit comporte une buse (26) de projection d'un fluide sous pression sur le produit suivant la direction de sollicitation (X-X).

9. Dispositif selon la revendication 8, caractérisé en ce que ledit fluide est de l'air.

10. Dispositif selon l'une quelconque des revendications 5 à 7, caractérisé en ce que l'organe d'actionnement comporte un vérin (40).

11. Dispositif selon l'une quelconque des revendications 5 à 7, caractérisé en ce que l'organe d'actionnement est un électro-aimant (60).
